# EUROPEAN PATENT SPECIFICATION

(11) **EP 3 193 429 B1**
(45) Date of publication and mention of the grant of the patent: **03.06.2020**
(21) Application number: 17151231.2
(22) Date of filing: 12.01.2017
(51) Int. Cl.: H02K 1/18, H02K 1/20

(54) **MOTOR AND ELECTRIC COMPRESSOR**
MOTOR UND ELEKTRISCHER VERDICHTER
MOTEUR ET COMPRESSEUR ÉLECTRIQUE

(30) Priority: 14.01.2016 JP 2016005610
(43) Date of publication of application: 19.07.2017
(73) Proprietor: MITSUBISHI HEAVY INDUSTRIES THERMAL SYSTEMS, LTD., Tokyo 108-8215 (JP)
(72) Inventor: TAKAHASHI, Kazuki, TOKYO, 108-8215 (JP); KIMATA, Yoshiyuki, TOKYO, 108-8215 (JP); TAKASU, Yogo, TOKYO, 108-8215 (JP); SATO, Hajime, TOKYO, 108-8215 (JP)
(74) Representative: Cabinet Beau de Loménie

(56) References cited:
- EP-A1- 0 240 644
- EP-A1- 2 244 354
- EP-A2- 1 143 599
- DE-B- 1 104 045
- JP-A- 2008 022 592
- JP-A- 2009 177 970
- US-A- 4 484 096
- US-A- 4 773 153
- US-A1- 2007 090 717
- US-A1- 2007 210 668
- US-A1- 2014 145 548

## Description

### Field

The present invention relates to a motor and an electric compressor.

### Background

An electric compressor includes a compression mechanism arranged in a housing and a motor for driving the compression mechanism. The motor has a stator and a rotor which rotates in the stator. The stator is formed by winding a laminated steel plate. For example, as disclosed in Patent Literatures 1 and 2, the stator is fixed to an inner surface of the housing by shrink-fitting or pressfitting.

### Citation List

### Patent Literature

Patent Literature 1: Japanese Patent Application Publication No. 2006-296010
Patent Literature 2: Japanese Patent Application Publication No. 2012-082792

JP 2009 177970 A relates to a stator, a motor, and a compressor.

US 2007/090717 relates to a brushless motor.

EP 0 240 644 relates to a dynamo-electric machine, in particular an alternator for a motor vehicle.

US 2014/145548 relates to a motor.

JP 2008/022592 relates to an electric motor.

DE 11 04 045 relates to small, uncoated electric motors.

US 4 773 153 relates to a method of manufacture of a flanged stator assembly for dynamoelectric machine.

EP 1 143 599 relates to a compressor and electric motor.

### Summary

When the stator is fixed by shrink-fitting, a large fastening force acts on the stator, and strain deformation may be generated in the stator. When the strain deformation is generated in the stator, magnetic characteristic of the stator is deteriorated, and a motor efficiency may be lowered.

A purpose of the present invention is to provide a motor and an electric compressor which can reduce strain deformation of a stator and can prevent deterioration in the motor efficiency.

The present invention is defined by a motor in accordance with claim 1.

According to the present invention, by the fixed member connected to the stator being fixed to the housing, the stator is fixed to the housing via the fixed member. By the space being formed between the side surface of the stator and the inner surface of the housing, even if the fixed member is fixed to the housing by shrink fitting or the like, large fastening force is released from acting on the stator. Thus, strain deformation of the stator is reduced and deterioration in the motor efficiency is suppressed. Further, if the stator and the housing are separate from each other, due to reaction force of rotating force of the rotor acting on the stator, the stator may rotate relatively to the housing. By providing the rotation preventing mechanism, the rotation of the stator is prevented and the deterioration in efficiency of the motor is suppressed.

According to the present invention, the rotation preventing mechanism includes a pin member that couples the fixed member and the stator together.

By the pin member coupling the fixed member and the stator together, the rotation of the stator relative to the fixed member is effectively prevented.

According to the present invention, the stator has at least one hole which is formed in the direction parallel to the central axis and in which the pin member is inserted, and the hole is provided more outerly than the bottom surface of the first groove in the radial direction of the central axis.

According to the present invention, the fixed member preferably has at least one second groove which is formed on a side surface of the fixed member so as to extend in the direction parallel to the central axis, and the at least one second groove is configured to allow oil to pass therethrough.

By providing the second groove, even if the fixed member is fixed to the inner surface of the housing, a passage of the oil will not be hindered.

According to the present invention, the fixed member includes an annular member that is configured to be arranged around the stator and fixed to the housing (3) by shrink fitting.

By the annular member being arranged between the stator and the housing, influence of fastening force on the stator is released and the deterioration in efficiency of the motor is suppressed.

According to the present invention, the annular member has at least one groove that is formed on a side surface of the annular member and that extends in the direction parallel to the central axis, wherein the at least one groove (43B) is configured to allow oil to pass therethrough, and at least one opening that is formed on the at least one groove.

By providing the opening, the contact area between the annular member and the stator is reduced, and even if the annular member is fixed to the housing by shrink fitting or the like, large fastening force is released from acting on the stator. Further, by providing the at least one groove, a passage of oil will not be hindered.

According to the present invention, the annular member preferably has a positioning portion that positions the stator.

By the positioning portion, the annular member and the stator are able to be accurately positioned.

According to the present invention, there is provided an electric compressor comprising the motor described above and a compression mechanism configured to be operated by power generated by the motor.

According to the present invention, since the motor in which the deterioration in the motor efficiency is suppressed is provided, efficiency of the electric compressor is improved.

According to the present invention, a motor and an electric compressor are provided which can reduce strain deformation of a stator and can prevent deterioration in the motor efficiency.

### Brief Description of Drawings

FIG. 1 is a sectional side view illustrating an example of an electric compressor according to a first example not forming part of the invention but representing background art useful for understanding the invention.
FIG. 2 is a plan view schematically illustrating an example of a resin bobbin according to the first example.
FIG. 3 is a perspective view schematically illustrating a stator and the resin bobbin according to the first example.
FIG. 4 is an exploded perspective view schematically illustrating the stator and the resin bobbin according to the first example.
FIG. 5 is a schematic diagram illustrating a positional relationship between a hole of the stator and a hole of the resin bobbin according to the first example.
FIG. 6 is a perspective view schematically illustrating a stator and a fixed member according to a second embodiment.
FIG. 7 is an exploded perspective view schematically illustrating the stator and the fixed member according to the second embodiment.
FIG. 8 is a perspective view schematically illustrating a stator and a fixed member according to a third example not forming part of the invention but representing background art useful for understanding the invention.
FIG. 9 is an exploded perspective view schematically illustrating the stator and the fixed member according to the third example.
FIG. 10 is an exploded perspective view illustrating a rotation preventing mechanism according to the third example.
FIG. 11 is an exploded perspective view illustrating a rotation preventing mechanism according to the third example.
FIG. 12 is an exploded perspective view illustrating a rotation preventing mechanism according to the third example.
FIG. 13 is a diagram illustrating the rotation preventing mechanism in FIG. 12 according to the third example.

### Description of Embodiments

Embodiments of the present invention are described below with reference to the drawings. However, the present invention is not limited to the embodiments. Components of each embodiment to be described below can be appropriately combined. There are cases where a part of the components is not used.

### <First Example>

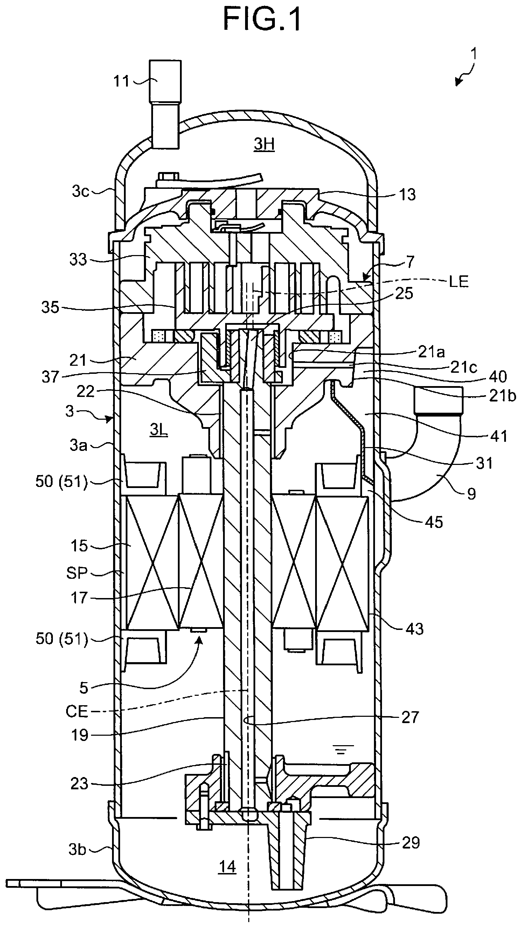

A first example is described. FIG. 1 is a cross sectional side view of an exemplary electric compressor 1 according to the present example. In the present embodiment, the electric compressor 1 is a hermetic electric scroll compressor.

As illustrated in FIG. 1, the electric compressor 1 includes a housing 3, a motor 5 provided in the housing 3, a rotary shaft 19, and a compression mechanism 7 which is connected to the rotary shaft 19 and is operated by power generated by the motor 5. The rotary shaft 19 is provided in the housing 3 and rotates around a central axis CE by the power generated by the motor 5.

The housing 3 is made of metal such as steel and aluminum. The housing 3 includes a cylindrical housing body 3a which extends in a direction parallel to the central axis CE, a bottom member 3b which closes a lower end of the housing body 3a, and a lid member 3c which closes an upper end of the housing body 3a. A suction pipe 9 is provided on the side of the housing body 3a. The suction pipe 9 introduces gas into the housing 3. A discharge pipe 11 is provided on the upper part of the lid member 3c. The discharge pipe 11 discharges gas compressed by the compression mechanism 7. An oil sump 14 where oil can be stored is provided on the bottom of the housing 3. A discharge cover 13 is provided between the housing body 3a and the lid member 3c. The discharge cover 13 divides a space in the housing 3 into a low pressure chamber 3L and a high pressure chamber 3H.

The motor 5 has a stator 15 that is arranged inside the housing 3, a rotor 17 that is arranged inside the stator 15 and rotates around the central axis CE, and a fixed member 50 that is fixed to an inner surface of the housing body 3a. The stator 15 includes a laminated steel plate. The rotor 17 is connected to the rotating shaft 19. The stator 15, the rotor 17, the fixed member 50, and the rotating shaft 19 are arranged in the low pressure chamber 3L of the housing 3. The motor 5 rotates the rotor 17 with electric power supplied from an external power source. For example, the rotor 17 rotates at a speed equal to or more than 90 rps. The rotation of the rotary shaft 19 rotates the rotor 17.

An upper end of the rotary shaft 19 is rotatably supported by an upper bearing 22. A lower end of the rotary shaft 19 is rotatably supported by a lower bearing 23. On the upper end of the rotary shaft 19, an eccentric pin 25 is provided which is projected upwards along an eccentric shaft LE deflected to the central axis CE. The upper end of the rotary shaft 19 having the eccentric pin 25 is connected to the compression mechanism 7.

The rotary shaft 19 and the eccentric pin 25 have an oil supply passage 27. The lower end of the rotary shaft 19 is arranged in the oil sump 14. An oil pump 29 provided at the lower end of the rotary shaft 19 supplies the oil stored in the oil sump 14 to the oil supply passage 27 of the rotary shaft 19 with the rotation of the rotary shaft 19.

The upper bearing 22 is provided in a bearing member 21. The bearing member 21 is fixed to an inner wall surface of the housing body 3a. The bearing member 21 rotatably supports the rotary shaft 19 via the upper bearing 22. A recess 21a provided on an upper surface of the bearing member 21 houses a drive bush 37 and stores the oil supplied by the oil pump 29 via the oil supply passage 27. The oil stored in the recess 21a is supplied to the compression mechanism 7. An oil discharge passage 21c formed in the bearing member 21 discharges the oil stored in the recess 21a to a space 40 between an end face 21b of the bearing member 21 and the inner wall surface of the housing body 3a.

The compression mechanism 7 includes a fixed scroll 33, an orbiting scroll 35, and the drive bush 37. When the motor 5 is operated and the rotary shaft 19 rotates, the orbiting scroll 35 orbits. In the compression mechanism 7, low-pressure gas introduced into the low pressure chamber 3L in the housing 3 via the suction pipe 9 is suctioned to a compression chamber between the fixed scroll 33 and the orbiting scroll 35 and also is compressed, by orbiting of the orbiting scroll 35. The compressed high-pressure gas is discharged from the fixed scroll 33 to the high pressure chamber 3H by opening the discharge cover 13 and is discharged to the outside of the housing 3 via the discharge pipe 11.

A guide plate 31 is provided below the bearing member 21. The guide plate 31 forms a tunnel 41, which leads the oil discharged from the oil discharge passage 21c to the oil sump 14 of the housing 3, between the guide plate 31 and the inner wall surface of the housing body 3a.

In the operation of the electric compressor 1, the oil in the oil sump 14 is pumped by the oil pump 29 and moves through the oil supply passage 27 formed in the rotary shaft 19. Then, the lower bearing 23 and the upper bearing 22 are lubricated with the oil. The drive bush 37 is lubricated with the oil discharged from the upper end of the oil supply passage 27. After that, the oil is stored in the recess 21a provided at the center of the upper surface of the bearing member 21. The oil which has been discharged from the oil supply passage 27 and excessively stored in the recess 21a is discharged from an exit of the oil discharge passage 21c provided on the end face 21b to the space 40 through the oil discharge passage 21c. The oil discharged from the oil discharge passage 21c to the space 40 is supplied to the tunnel 41 between the guide plate 31 and the inner wall surface of the housing body 3a. After passing through the tunnel 41, the oil supplied to the tunnel 41 passes through at least one first groove 43 provided on side surface of the stator 15 and is transmitted to the oil sump 14.

The fixed member 50 is connected to the stator 15, such that a space SP is formed between the side surface of the stator 15 and the inner surface of the housing body 3a.

In this embodiment, the fixed member 50 is a resin bobbin 51 that supports a coil. The resin bobbin 51 is used for forming a coil in the stator 15. The resin bobbin 51 is provided in an upper portion and a lower portion of the stator 15.

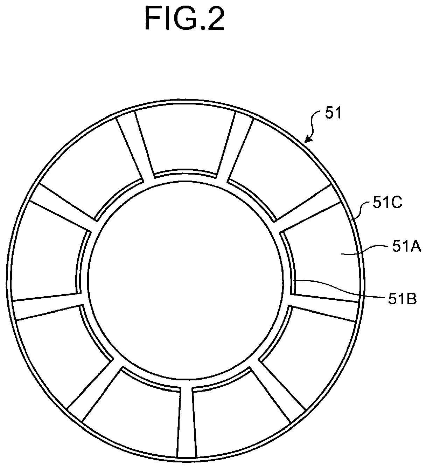

FIG. 2 is a plan view schematically illustrating an example of the resin bobbin 51 according to this example. As illustrated in FIG. 1 and FIG. 2, the resin bobbin 51 is attached to a plurality of teeth portions radially provided in a stator core, and is wound by stator coils through concentrated winding. The resin bobbin 51 has a winding portion 51A around which the coil is wound, an inner circumferential flange portion 51B that contacts a magnetic pole core of a stator core, and an outer circumferential flange portion 51C that contacts a yoke core.

The resin bobbin 51 is fixed to the housing 3 by shrink fitting. The resin bobbin 51 is formed of a high strength and highly heat resistant material so as to be able to endure shrink fitting and large fastening force due to the shrink fitting. For example, if a shrink fitting temperature is 200°C, the resin bobbin 51 is preferably formed of a material with a heat resistant temperature equal to or higher than 200°C.

In this example, the resin bobbin 51, for example, is made of a polyimide resin, and has high strength and high heat resistance. The resin bobbin 51 may include a base material made of metal like iron, and a synthetic resin film coated on a surface of the base material. For example, the resin bobbin 51 may have a base material made of a steel material, such as SM400B or SS400, and a polyester film coated on a surface of the base material. Thickness of the coated synthetic resin film is preferably equal to or thicker than 0.25 mm.

A diameter of the resin bobbin 51 is larger than a diameter of the stator 15. In a radial direction of the central axis CE, a side surface of the resin bobbin 51 is arranged more outerly than the side surface of the stator 15. Thus, the resin bobbin 51 is fixed to the housing 3 by shrink fitting.

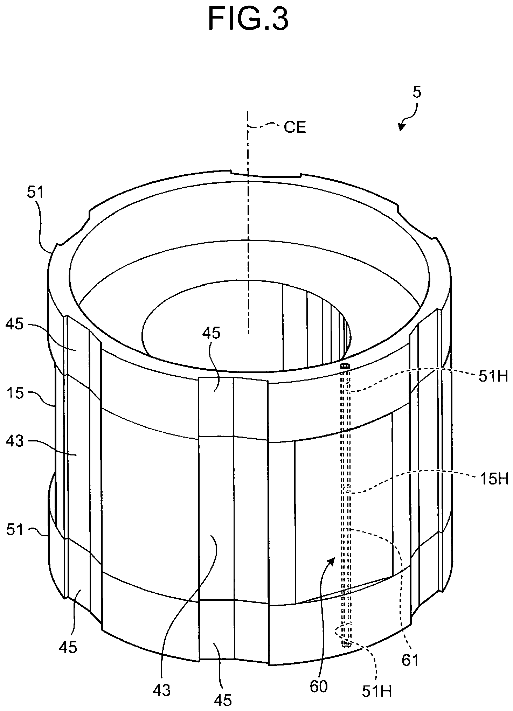

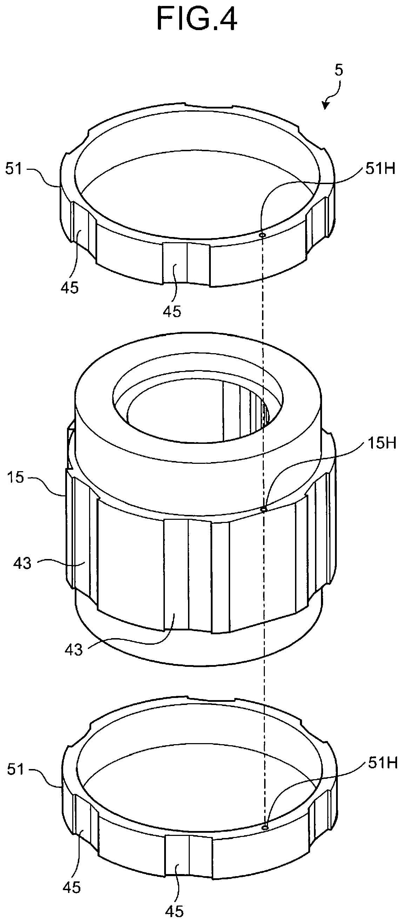

FIG. 3 is a perspective view schematically illustrating the stator 15 and the resin bobbin 51 according to this example. FIG. 4 is an exploded perspective view schematically illustrating the stator 15 and the resin bobbin 51 according to this example.

As illustrated in FIG. 3 and FIG. 4, the stator 15 has at least one first groove 43 that is formed on the side surface of the stator 15, so as to extend in the direction parallel to the central axis CE. A plurality of the first grooves 43 is provided in a circumferential direction of the central axis CE. As described above, oil is able to pass through the first groove 43, and oil that has passed through the first groove 43 is fed to the oil sump 14.

The resin bobbin 51 has at least one second groove 45 that is formed on the side surface of the resin bobbin 51, so as to extend in the direction parallel to the central axis CE. A plurality of the second grooves 45 is provided in the circumferential direction of the central axis CE. Each of the second grooves 45 is made to correspond to each of the first grooves 43. The resin bobbin 51 is fixed to the housing body 3a, in a state where the side surface of the resin bobbin 51 is in contact with the inner surface of the housing body 3a. By providing the second grooves 45, even if the resin bobbin 51 is fixed to the inner surface of the housing body 3a, oil discharged from the tunnel 41 between the guide plate 31 and the inner wall surface of the housing body 3a can pass through the second grooves 45 and the first grooves 43 to be fed to the oil sump 14.

In this example, the motor 5 includes a rotation preventing mechanism 60 that prevents rotation of the stator 15 relative to the resin bobbin 51. The rotation preventing mechanism 60 prevents the rotation of the stator 15 caused by reaction force of rotating force of the rotor 17 acting on the stator 15. In this example, the space SP is formed between the stator 15 and the housing 3, and the stator 15 and the housing 3 are separate from each other. That is, although the stator 15 is fixed to the housing 3 via the resin bobbin 51, the stator 15 is not directly fixed to the housing 3. Thus, if the rotating force of the rotor 17 is strong, due to the reaction force of that rotating force of the rotor 17, the stator 15 may rotate relatively to the housing 3. The rotation preventing mechanism 60 prevents the rotation of the resin bobbin 51 relative to the housing 3 by preventing the rotation of the stator relative to the resin bobbin 51 fixed to the housing 3.

In this example, the rotation preventing mechanism 60 includes a pin member 61 that couples the resin bobbin 51 and the stator 15 together. In the stator 15, at least one hole 15H is formed in the direction parallel to the central axis CE. In the resin bobbin 51 also, at least one hole 51H is formed in the direction parallel to the central axis CE. The hole 15H and the hole 51H are made to correspond to each other. By the pin member 61 being arranged in the hole 15H and the hole 51H, the rotation of the stator 15 relative to the resin bobbin 51 is prevented.

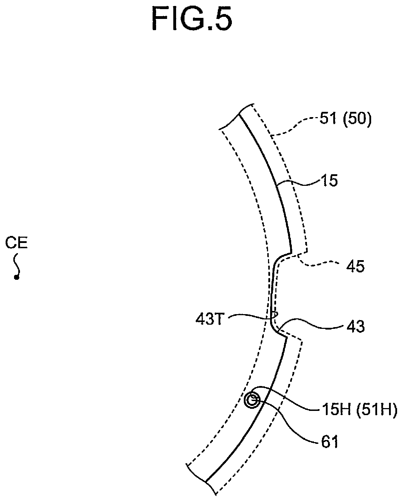

FIG. 5 is a schematic diagram illustrating a positional relation between the hole 15H of the stator 15 and the hole 51H of the resin bobbin 51 according to this example. As illustrated in FIG. 5, the hole 15H is provided more outerly than a bottom surface 43T of the first groove 43 in the radial direction of the central axis CE.

In a case where the first groove 43 is provided in the stator 15, the magnetic flux characteristic of the stator 15 may be deteriorated when the hole 15H in which the pin member 61 is arranged is provided on the inner side of the bottom surface 43T of the first groove 43 in the radiation direction of the central axis CE. When the hole 15H in which the pin member 61 is arranged is provided on the outer side of the bottom surface 43T of the first groove 43 in the radiation direction of the central axis CE, the deterioration in the magnetic flux characteristic of the stator 15 and in the motor efficiency are suppressed.

As described above, according to this example, by the resin bobbin 51 connected to the stator 15 being fixed to the housing 3, the stator 15 is fixed to the housing 3 via the resin bobbin 51. Further, by the space SP being formed between the side surface of the stator 15 and the inner surface of the housing 3, even if the resin bobbin 51 is fixed to the housing 3 by shrink fitting or the like, large fastening force is released from acting on the stator 15. Therefore, the strain deformation of the stator 15 is reduced and the deterioration in the motor efficiency is suppressed. Further, by providing the rotation preventing mechanism 60, the rotation of the stator 15 relative to the housing 3 and the resin bobbin 51 is prevented, and the deterioration in efficiency of the motor 5 is suppressed.

Further, in this example, the stator 15 has the first groove 43, through which oil passes, and the rotation preventing mechanism 60 is provided more outerly than the bottom surface 43T of the first groove 43 in the radial direction of the central axis CE. Thereby, the deterioration in the magnetic flux characteristic of the stator 15 and in the motor efficiency are suppressed.

Further, in this example, the rotation preventing mechanism 60 includes the pin member 61 that couples the resin bobbin 51 and the stator 15 together. By the pin member 61, the rotation of the stator 15 relative to the resin bobbin 51 is effectively prevented.

In this example, the resin bobbin 51 is fixed to the housing 3 by shrink fitting. The resin bobbin 51 may be fixed to the housing 3 by welding. In that case, the resin bobbin 51 preferably includes a base material made of metal, and a synthetic resin film coated on a surface of that base material. By the synthetic resin film not being provided on a portion of the resin bobbin 51 to be welded to the housing 3, the resin bobbin 51 and the housing 3 are able to be welded together. The resin bobbin 51 may be fixed to the housing 3 by caulking.

### <Second Embodiment>

A second embodiment is described. In the following description, the components which are the same as or similar to those in the above embodiment are denoted with the same reference numerals, and the description for the components is simplified or omitted.

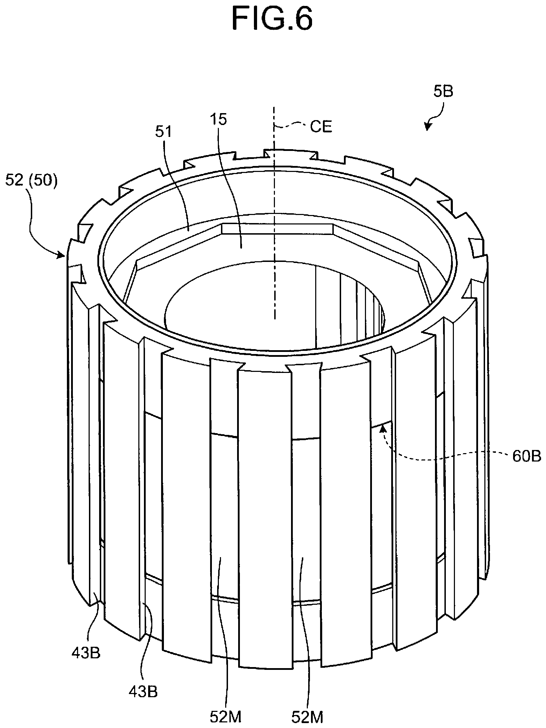

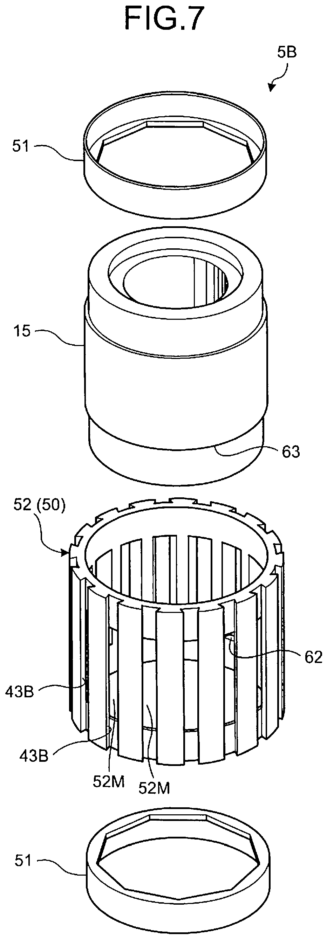

FIG. 6 is a perspective view schematically illustrating a stator 15 and a fixed member 50 of a motor 5B according to this embodiment. FIG. 7 is an exploded perspective view schematically illustrating the stator 15 and the fixed member 50 according to this embodiment.

As illustrated in FIG. 6 and FIG. 7, in this embodiment, the fixed member 50 is an annular member 52 that is arranged around the stator 15. The stator 15 and the resin bobbin 51 are arranged inside the annular member 52. A side surface of the annular member 52 contacts the inner surface of the housing 3. The annular member 52 is fixed to the housing 3 by shrink fitting.

The annular member 52 is formed of a steel material, such as SM400B or SS400.

The annular member 52 has at least one first groove 43B that is formed on the side surface of the annular member 52, and at least one opening 52M that is formed on a bottom surface of the first groove 43B. A plurality of the first grooves 43B is provided in the circumferential direction of the central axis CE. The first groove 43B extends in the direction parallel to the central axis CE. Oil passes through the first groove 43B.

The opening 52M has a rectangular shape that is long in the direction parallel to the central axis CE. A plurality of the openings 52M is provided in the circumferential direction of the central axis CE.

In this embodiment, a welded portion, where the annular member 52 and the stator 15 are welded together, is provided as a rotation preventing mechanism 60B that prevents rotation of the stator 15 relative to the annular member 52. For example, by a part of an inner surface of the annular member 52 being welded to a part of an outer surface of the stator 15, the rotation of the stator 15 relative to the annular member 52 is prevented. The welded portion is provided at a part where magnetic characteristic of the stator 15 is not affected.

Further, in this embodiment, a step portion 62 is provided inside the annular member 52. A step portion 63 that comes into contact with the step portion 62 is provided in the stator 15. By the stator 15 being inserted inside the annular member 52 and the step portion 62 and the step portion 63 coming into contact with each other, positioning of the annular member 52 and the stator 15 in the direction parallel to the central axis CE is completed. The step portion 62 functions as a positioning portion, which is provided in the annular member 52, and which is for positioning the stator 15. In a state where the annular member 52 and the stator 15 have been positioned by the step portion 62, the annular member 52 and the stator 15 are welded together.

As described above, in this embodiment, the annular member 52 is arranged between the stator 15 and the housing 3. Thereby, influence of fastening force on the stator 15 is released, and deterioration in efficiency of the motor 5 is suppressed.

Further, in this embodiment, the contact area between the annular member 52 and the stator 15 is reduced by providing the openings 52M in the annular member 52, and even if the annular member 52 is fixed to the housing 3 by shrink fitting, large fastening force is released from acting on the stator 15. Further, by providing the first groove 43B in the annular member 52, a passage of oil will not be hindered.

A pin member that couples an annular member 63 and the stator 15 together is provided as the rotation preventing mechanism 60B. Further, a so-called D-cut may be provided in the stator 15, and by use of that D-cut, the rotation of the stator 15 relative to the annular member 52 may be prevented.

In this embodiment, the first groove 43, through which oil passes, may be provided in the stator 15. In that case, the rotation preventing mechanism 60B is preferably provided more outerly than the bottom surface 43T of the first groove 43 in the radial direction of the central axis CE.

### <Third Example>

A third example is described. In the following description, the components which are the same as or similar to those in the above example are denoted with the same reference numerals, and the description for the components is simplified or omitted.

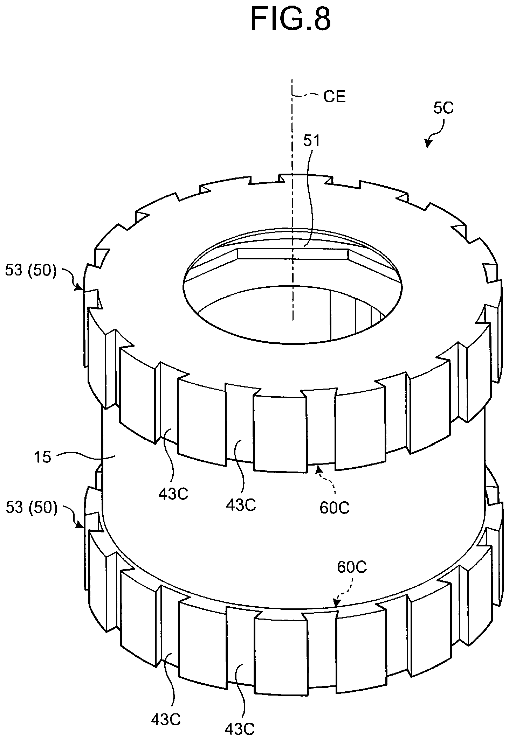

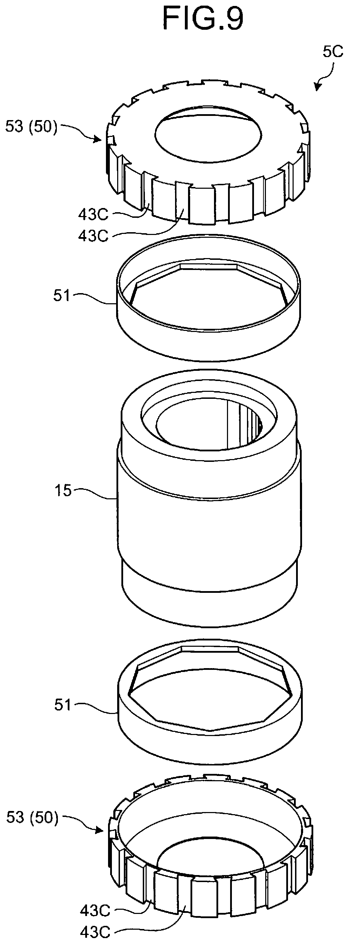

FIG. 8 is a perspective view schematically illustrating a stator 15 and a fixed member 50 of a motor 5C according to this embodiment. FIG. 9 is an exploded perspective view schematically illustrating the stator 15 and the fixed member 50 according to this example.

As illustrated in FIG. 8 and FIG. 9, in this example, the fixed member 50 is a basket member 53 that is arranged around the resin bobbin 51. The resin bobbin 51 is arranged inside the basket member 53. The stator 15 is arranged outside the basket member 53, and the side surface of the stator 15 and the inner surface of the housing 3 oppose each other. In the radial direction of the central axis CE, a side surface of the basket member 53 is arranged more outerly than the side surface of the stator 15. The side surface of the basket member 53 comes into contact with the inner surface of the housing 3. A space is formed between the side surface of the stator 15 and the inner surface of the housing 3. The basket member 53 is fixed to the housing 3 by shrink fitting.

The basket member 53 is formed of a steel material, such as SM400B or SS400.

The basket member 53 has at least one first groove 43C formed on the side surface of the basket member 53. A plurality of the first groove 43C is provided in the circumferential direction of the central axis CE. The first groove 43C extends in the direction parallel to the central axis CE. Oil passes through the first groove 43C.

In this example, a welded portion, where the basket member 53 and the stator 15 are welded together, is provided as a rotation preventing mechanism 60C that prevents rotation of the stator 15 relative to the basket member 53. The welded portion is provided at a part where magnetic characteristic of the stator 15 is not affected.

As described above, according to this example, by the basket member 53 being arranged between the resin bobbin 51 and the housing 3, the space is able to be formed between the side surface of the stator 15 and the inner surface of the housing 3. Further, by the basket member 53 being subjected to shrink fitting, influence of fastening force on the resin bobbin 51 is released.

Further, in this example, by providing the first groove 43C in the basket member 53, a passage of oil will not be hindered.

In this example, the basket member 53 may be fixed to the housing 3 by welding. The basket member 53 may be fixed to the housing 3 by caulking.

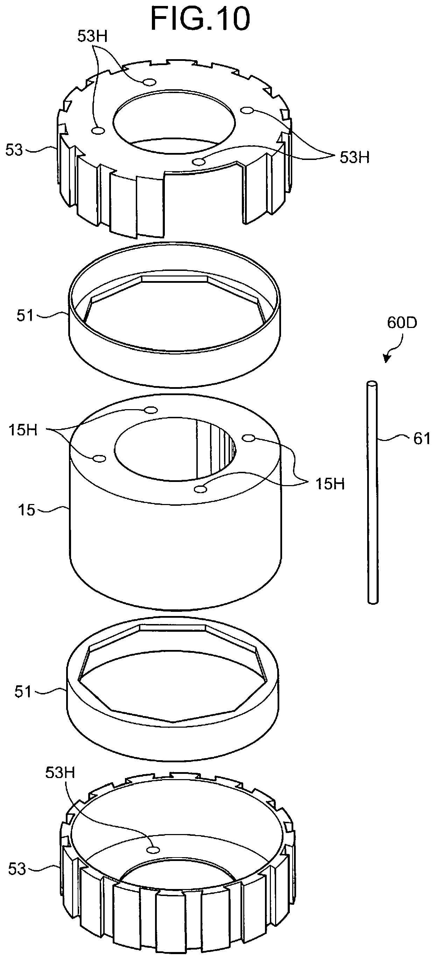

In this example, as illustrated in FIG. 10, the pin member 61 may be provided as a rotation preventing mechanism 60D. By at least one hole 53H being formed in the basket member 53 in the direction parallel to the central axis CE, at least one hole 15H being formed in the stator 15 in the direction parallel to the central axis CE, and the pin member 61 being arranged in these hole 53H and hole 15H, rotation of the stator 15 relative to the basket member 53 fixed to the housing 3 is prevented. Further, as illustrated in FIG. 10, by providing a plurality (four in the example illustrated in FIG. 10) of the holes 53H and the holes 15H in the circumferential direction of the central axis CE and inserting the pin member 61 in each of these holes 53H and holes 15H, the rotation of the stator 15 is effectively prevented.

In the example illustrated in FIG. 10, when the first groove 43 is provided in the stator 15, the hole 15H is preferably provided more outerly than the bottom surface 43T of the first groove 43 in the radial direction of the central axis CE as described with reference to FIG. 5.

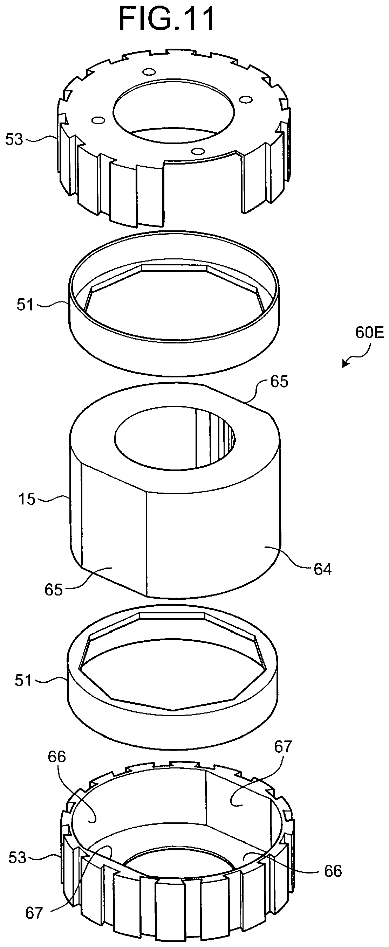

In this example, as illustrated in FIG. 11, a so-called D-cut may be provided as a rotation preventing mechanism 60E. As illustrated in FIG. 11, at least one first curved surface portion 64 and at least one first planar surface portion 65 are provided on the side surface of the stator 15. On a cross section orthogonally intersecting the central axis CE, the first curved surface portion 64 is arc-shaped. On an inner surface of the basket member 53, at least one second curved surface portion 66, which comes into contact with the at least one first curved surface portion 64, and at least one second planer surface portion 67, which comes into contact with the at least one first planar surface portion 65, are provided. The rotation preventing mechanism 60E is formed of the first and second curved surface portions 64 and 66, and the first and second planar surface portions 65 and 67. By the stator 15 being subjected to the so-called D-cutting, the rotation of the stator 15 relative to the basket member 53 is effectively prevented.

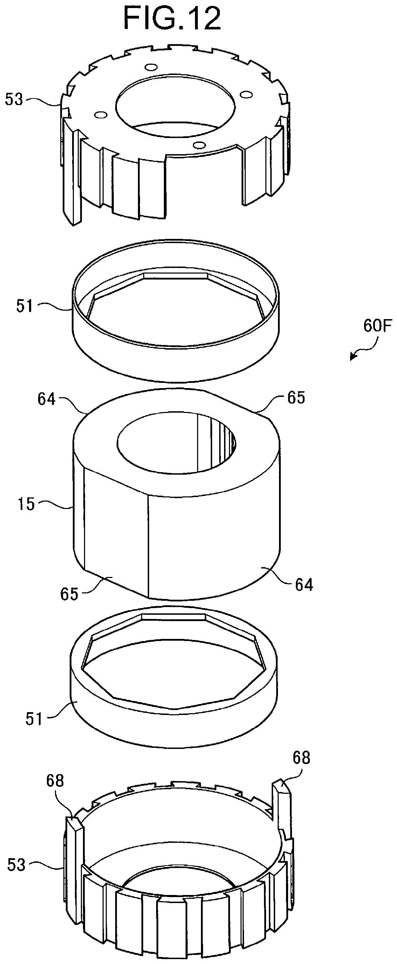

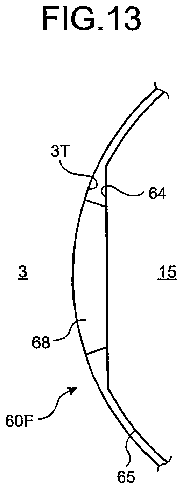

In this example, as illustrated in FIG. 12, if the first curved surface portions 64 and the first planar surface portions 65 are provided on the side surface of the stator 15 by the stator 15 being subjected to D-cutting; as illustrated in FIG. 13, a gap is formed between the first planar surface portion 65 and an inner surface 3T of the housing 3. As illustrated in FIG. 12 and FIG. 13, at least one insertion portion 68, which is provided in the basket member 53 and is inserted in the gap between the first planar surface portion 65 and the inner surface 3T of the housing 3, may be provided as a rotation preventing mechanism 60F. With the rotation preventing mechanism 60F illustrated in FIG. 12 and FIG. 13 also, the rotation of the stator 15 relative to the basket member 53 is effectively prevented.

In the above described second embodiment and example, another part, such as a bearing, may be fixed to the annular member 52 or the basket member 53.

## Claims

1. A motor (5) comprising:
a stator (15) configured to be arranged inside a housing (3); and
a rotor (17) configured to be arranged inside the stator (15) and to rotate around a central axis (CE);
a fixed member (50) configured to be fixed to an inner surface (3T) of the housing (3) and connected to the stator (15) such that a space (SP) is formed between a side surface of the stator (15) and the inner surface (3T) of the housing (3); and
a rotation preventing mechanism (60) configured to prevent rotation of the stator (15) relative to the fixed member (50), wherein
the rotation preventing mechanism (60) includes a pin member (61) that couples the fixed member (50) and the stator (15) together,
the stator (15) has at least one hole (15H), which is formed in a direction parallel to the central axis (CE), and in which the pin member (61) is inserted, and
wherein the fixed member (50) includes an annular member (52) that is configured to be arranged around the stator (15) and fixed to the housing (3) by shrink fitting, the annular member (52) has at least one groove (43B) that is formed on a side surface of the annular member (52), and extends in the direction parallel to the central axis (CE), wherein the at least one groove (43B) is configured to allow oil to pass therethrough, and at least one opening (52M) to the stator (15) that is formed on the at least one groove (43B).

2. The motor (5) according to claim 1, wherein the fixed member (50) has at least one second groove (45) which is formed on a side surface of the fixed member (50) so as to extend in the direction parallel to the central axis (CE), and the at least one second groove (45) is configured to allow oil to pass therethrough.

3. The motor (5) according to claim 1 or 2, wherein the annular member (52) has a positioning portion (62) that positions the stator (15).

4. An electric compressor (1), comprising:
the motor (5) according to any one of claim 1 to claim 3; and
a compression mechanism (7) configured to be operated by power generated by the motor (5).

## Patentansprüche

1. Motor (5), der Folgendes umfasst:
einen Stator (15), der dazu ausgelegt ist, in einem Gehäuse (3) angeordnet zu sein; und
einen Rotor (17), der dazu ausgelegt ist, im Stator (15) angeordnet zu sein und um eine Mittelachse (CE) zu rotieren;
ein festes Element (50), das dazu ausgelegt ist, an einer Innenfläche (3T) des Gehäuses (3) befestigt und mit dem Stator (15) verbunden zu sein, derart, dass zwischen einer Seitenfläche des Stators (15) und der Innenfläche (3T) des Gehäuses (3) ein Raum (SP) gebildet ist; und
ein Rotationsverhinderungsmechanismus (60), der dazu ausgelegt ist, eine Rotation des Stators (15) relativ zum festen Element (50) zu verhindern, wobei
der Rotationsverhinderungsmechanismus (60) ein Stiftelement (61) beinhaltet, das das feste Element (50) und den Stator (15) zusammenkoppelt,
der Stator (15) mindestens ein Loch (15H) aufweist, das in einer Richtung parallel zur Mittelachse (CE) gebildet ist und in das das Stiftelement (61) eingesteckt ist, und
wobei das feste Element (50) ein Ringelement (52) beinhaltet, das dazu ausgelegt ist, um den Stator (15) angeordnet und mittels Aufschrumpfung am Gehäuse (3) befestigt zu sein, wobei das Ringelement (52) mindestens eine Nut (43B), die an einer Seitenfläche des Ringelements (52) gebildet ist und sich in die Richtung parallel zur Mittelachse (CE) erstreckt, wobei die mindestens eine Nut (43B) dazu ausgelegt ist, es zu erlauben, dass Öl dadurch geleitet wird, und mindestens eine Öffnung (52M) zum Stator (15), die in der mindestens einen Nut (43B) gebildet ist, aufweist.

2. Motor (5) nach Anspruch 1, wobei das feste Element (50) mindestens eine zweite Nut (45) aufweist, die an einer Seitenfläche des festen Elements (50) gebildet ist, um sich in die Richtung parallel zur Mittelachse (CE) zu erstrecken, und die mindestens eine zweite Nut (45) dazu ausgelegt ist, es zu erlauben, dass Öl dadurch geleitet wird.

3. Motor (5) nach Anspruch 1 oder 2, wobei das Ringelement (52) einen Positionierungsabschnitt (62) aufweist, der den Stator (15) positioniert.

4. Elektrischer Verdichter (1), der Folgendes umfasst:
den Motor (5) nach einem der Ansprüche 1 bis 3 und
einen Verdichtungsmechanismus (7), der dazu ausgelegt ist, mittels Leistung, die vom Motor (5) erzeugt wird, betrieben zu werden.

## Revendications

1. Moteur (5) comprenant :
un stator (15) configuré pour être agencé à l'intérieur d'un boîtier (3) ; et
un rotor (17) configuré pour être agencé à l'intérieur du stator (15) et pour tourner autour d'un axe central (CE) ;
un élément fixe (50) configuré pour être fixé à un surface interne (3T) du boîtier (3) et relié au stator (15) de telle sorte qu'un espace (SP) est formé entre une surface latérale du stator (15) et la surface interne (3T) du boîtier (3) ; et
un mécanisme de prévention de rotation (60) configuré pour empêcher la rotation du stator (15) par rapport à l'élément fixe (50), dans lequel
le mécanisme de prévention de rotation (60) comprend un élément de broche (61) qui couple l'élément fixe (50) et le stator (15) ensemble,
le stator (15) a au moins un trou (15H) qui est formé dans une direction parallèle à l'axe central (CE) et dans lequel est inséré l'élément de broche (61), et
dans lequel l'élément fixe (50) comprend un élément annulaire (52) qui est configuré pour être agencé autour du stator (15) et fixé au boîtier (3) par un ajustement par contraction, l'élément annulaire (52) possède au moins une rainure (43B) qui est formée sur une surface latérale de l'élément annulaire (52) et s'étend suivant la direction parallèle à l'axe central (CE), dans lequel la ou les rainures (43B) sont configurées pour permettre le passage d'huile à travers celles-ci et au moins une ouverture (52M) vers le stator (15) qui est formée sur la ou les rainures (43B).

2. Moteur (5) selon la revendication 1, dans lequel l'élément fixe (50) possède au moins une seconde rainure (45) qui est formée sur une surface latérale de l'élément fixe (50) de façon à s'étendre suivant la direction parallèle à l'axe central (CE) et la ou les secondes rainures (45) sont configurées pour permettre le passage d'huile à travers celles-ci.

3. Moteur (5) selon la revendication 1 ou 2, dans lequel l'élément annulaire (52) a une partie de positionnement (62) qui positionne le stator (15).

4. Compresseur électrique (1), comprenant :
le moteur (5) selon l'une quelconque des revendications 1 à 3 ; et
un mécanisme de compression (7) configuré pour être activé par de l'énergie générée par le moteur (5).
